Europäisches Patentamt

European Patent Office

Office européen des brevets

(19)

(11)  **EP 1 213 688 A2**

(12)  **EUROPEAN PATENT APPLICATION**

(43) Date of publication:
     **12.06.2002 Bulletin 2002/24**

(51) Int Cl.7: **G07F 17/16**, G07F 7/00,
     G06F 17/60

(21) Application number: **01310141.5**

(22) Date of filing: **04.12.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventor: **Lukose, Rajan M.**<br>**Stanford, California 94305 (US)** |
| (30) Priority: **08.12.2000 US 733138** | (74) Representative: **Skone James, Robert Edmund**<br>**GILL JENNINGS & EVERY**<br>**Broadgate House**<br>**7 Eldon Street**<br>**London EC2M 7LH (GB)** |
| (71) Applicant: **Xerox Corporation**<br>**Rochester, New York 14644 (US)** | |

(54)  **A system and method for selling contingent information**

(57)  A method for selling contingent information includes receiving an offer for the information with at least one contingency, providing the information in response to the offer, and then receiving a contingent payment if at least one condition for the contingency is satisfied after the information has been provided.

FIG. 2

## Description

The present invention relates to a system and method for selling contingent information good(s)

Information, also known as information goods, available in forums, such as the Internet, are currently offered in a few relatively simple ways. One way is known as a "free model" where users are able to access information goods in exchange for their possible attention spent on advertising that accompanies the information goods, for example, banner ads at a web site, such as Yahoo.com®. Another way is known as a "subscription model" where users are allowed access to information goods for a fixed fee, for example, a subscription to receive a digital edition of The Wall Street Journal® Interactive on a daily basis. Yet another way is known as a "per use model" where users are charged cash for individual pieces of information goods received, for example, digital music received from a web site, such as eMusic.com® or archived stories received from a web site, such as The Chicago Tribune ® web site. Although the above examples may be effective ways to price and exchange such non-contingent information goods, they are not always effective ways to market contingent information goods.

Contingent information goods have a much richer interaction with the world at large. Typically, a contingent information good will include a specific assertion, claim, or prediction about some contingency which can be verified at some time in the future. One simple example of a contingent information good is a brokerage report that makes a stock recommendation, such as an assertion that a price target for Company X stock at year-end will be $20. In some sense, the value of this information good is "contingent" on one or more events in the world. A variety of sources sell these types of stock recommendations based on the subscription or per use model and keep track of the accuracy of the seller's recommendations to form reputations. Essentially, the cost to access these contingent information goods is based according to the reputations of each of the sellers. Unfortunately, pricing based on the reputations of the sellers is not an effective way to price contingent information goods. Potential consumers of these information goods can be justifiably concerned that the incentives of the seller may not be in alignment with the relevant incentives of the consumer.

Additionally, even if there was a condition for a contingency on which a transaction for an information good is based, the incentives of the seller and the buyer are still not necessarily compatible. To ensure payment for the information good, the seller has an incentive to set a condition that will be or is highly likely to be satisfied. As a result, the seller may misrepresent or unrealistically present its assertion to a buyer in establishing a condition for the contingency. Using the example of the brokerage report, the seller may set the condition as being company X's stock will be greater than zero at year's end.

The present lack of a correctly designed mechanism for selling contingent information goods on forums, such as the Internet, is a source of economic inefficiency. Potential sellers of premium contingent information goods often cannot get prices which they think are appropriate using their private information because of the flood of free, cheap, and potentially low quality contingent information goods available from other sources. The potential for low quality contingent good information introduces the possibility from the buyer's side that the contingent information goods from a particular seller may be of low quality. This makes buyers and sellers unwilling to transact when gains from such a transaction exist for both parties. With a better selling mechanism, many more contingent information goods could be sold.

A method and system for selling information good(s) in accordance with one embodiment of the present invention is provided. First, an offer for the information including at least one contingency is received from the buyer. Next, the information in response to the offer is provided. Once the information good is provided, a first payment for the information is received if at least one condition for the contingency is satisfied after the information has been provided to the buyer.

A system for selling at least one information good in accordance with another embodiment of the present invention includes a receiving system, a source for the information good, and a first payment processing system. The receiving system receives an offer for the information including at least one contingency from the buyer. The source for the information good provides the information in response to the offer. The first payment processing system receives a first payment for the information if at least one condition for the contingency is satisfied after the information has been provided to the buyer.

A computer readable medium having stored instructions for selling at least one information good in accordance with a further embodiment of the present invention includes a instructions to be executed by a processor. First, an offer for the information including at least one contingency is received from the buyer. Next, the information in response to the offer is provided. Once the information good is provided, a first payment for the information is received if at least one condition for the contingency is satisfied after the information has been provided to the buyer.

The present invention provides a method and system for selling contingent information goods. Rather than using a subscription model or a per use model where the consumer pays up front for access to the contingent information good, the consumer can enter into a "contingent contract" with the seller such that the seller is only paid as a function of the outcome of the condition on which the contingency is made in the information good. Typically, the contract is enforced once the contingency or contingencies are resolved.

The present invention also makes it more likely that more contingent information goods will be transacted between sellers and buyers by tying at least a portion of the payment made to a seller to the satisfaction of a condition. If the condition is not met, then the seller may receive a reduced payment or no payment at all. Accordingly, the incentives for the seller are more in line with the incentives for the buyer.

Further, the present invention makes it even more likely that the seller will accurately predict a probability of a condition for the contingency occurring by tying the amount of the payment to the accuracy of the assertion or prediction and the probability against the true probability of the actual result. The true probability is the actual likelihood that the condition for the contingency will be satisfied when the event on which the condition is based occurs. In one embodiment, the payment is maximized if the predicted or announced probability for the condition occurring is substantially the same as the true probability for the condition occurring.

## BRIEF DESCRIPTION OF THE DRAWINGS

Figure 1 is a block diagram of a system for selling at least one contingent information good;

Figure 2 is a flow chart of a method for selling at least one contingent information good;

Figure 3 is a flow chart of one embodiment of a process for setting a contingent payment;

Figure 4 is a two dimensional graph of payment as a function of an announced probability and a true probability for a condition in a contingency occurring in accordance with one example; and,

Figure 5 is a three dimensional graph of payment as a function of an announced probability and a true probability for a condition in a contingency occurring in accordance with another example.

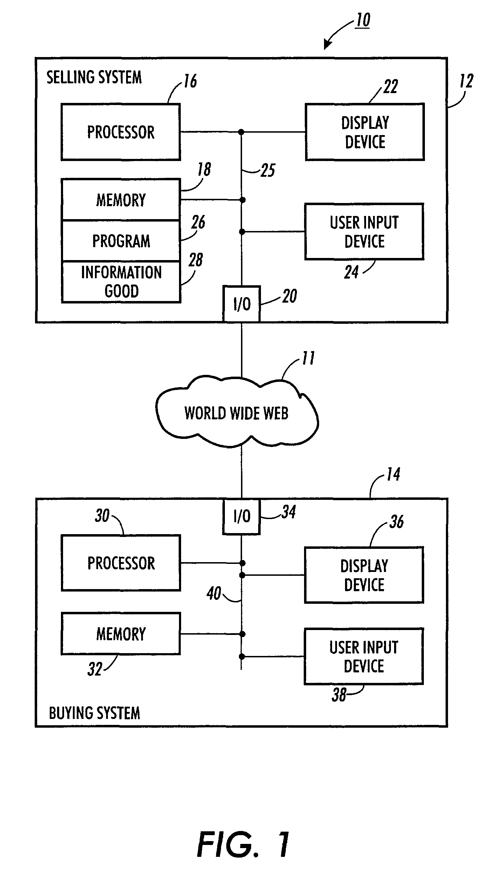

A system 10 and method for selling at least one information good in accordance with one embodiment of the present invention is illustrated in Figures 1-3. The selling system 10 includes a selling system 12 with a receiving system, a source for the information good, and a contingent payment processing system. The method includes receiving an offer for the information with at least one contingency, providing the information in response to the request and based on the contingency, and receiving a contingent payment for the information if at least one condition for the contingency is satisfied after the information has been provided. The present invention provides a number of advantages including providing a new system and method for selling contingent information.

Information, also known as an information good, is any kind of knowledge in tangible or intangible form available in a variety of different formats, such as in a printed format, on a display, or on a computer readable medium, such as a disk. A contingency is an uncertainty about something occurring. Accordingly, contingent information or a contingent information good is any kind of knowledge where there is some uncertainty about at least a portion of the knowledge which will be resolved by some event occurring in the world at some future time. Non-contingent information is knowledge where there is no uncertainty, at least with respect to the knowledge of interest for the particular application or situation. A condition is a premise upon which fulfillment of a contingency depends. By way of example only, a contingency in an information good on Company X may be, "What is the price of Company X's stock going to be at years end?", the condition may be, "Company X's stock at years end will be $10," and the announced or predicted probability for the condition occurring may be, "We believe there is a fifty percent chance that Company X's stock at years end will be $10." The contingency or contingencies, the condition or conditions and the announced or predicted probabilities for each of the conditions occurring can vary as required for the particular application or situation as described in greater detail below.

Referring to Figure 1, in this particular embodiment, a selling system 12 for contingent information goods is operatively coupled to a buying system 14 via the world wide web 11. A variety of communication systems and/or methods can be used to operatively couple and communicate between the selling system 12 and the buying system 14 including a direct connection, a local area network, a wide area network, the world wide web, modems and phone lines, or wireless communication technology each having communications protocols. Although one configuration for the selling system 10 is shown, other configurations are possible, such as having other numbers of buying systems 14 and/or selling systems 12 and/or having a contracting system associated with or operatively coupled between and communicating with the selling system 12 and the buying system 14. Such a contracting system could oversee the selling of the contingent information good in conjunction with or instead of the selling system. Accordingly, although the method is described below as being located and implemented in the selling system, some or all of the components and operation of the selling system 12 could be located in the contracting system.

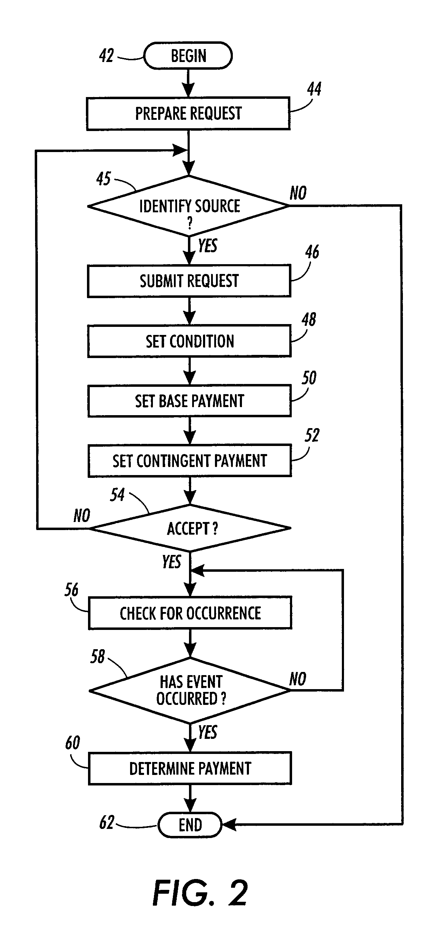

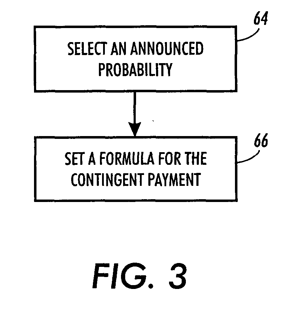

The selling system 12 includes a processor 16, a memory storage device 18, an input/output interface 20, a display device 22, and a user input device 24 which are coupled together by a bus 25 or other communication link, although the selling system 12 can be comprised of other combinations of components. The processor 16 executes a program of stored instructions for selling at least one contingent information good in accordance with the present invention as described herein and as set forth in the flowcharts in Figures 2 and 3. The programmed instructions also include a contracting program for establishing, monitoring, and overseeing a contract between two or more parties. The selling system 12 can have multiple processors to execute the programmed instructions and the processor or processors which execute some or all of the instructions can be located elsewhere in the system, such as in the contracting system.

The memory storage device 18 stores at least one program 26 with instructions for the method for selling at least one contingent information good for execution by the processor 16 as well as at least one information good 28. A variety of different types of memory storage devices, such as a random access memory (RAM) or a read only memory (ROM) in the system or a floppy disk, hard disk, or CD ROM which is read from and/or written to by a magnetic or optical reading and/or writing system that is coupled to one or more of the processors, can be used to store these programmed instructions as well as other information. The selling system 12 can have multiple memory storage devices to store the programmed instructions and can store instructions for other programs to be executed by the processor 16. The memory storage devices as well as some or all of the programmed instructions can be located and stored elsewhere in the system, such as in the contracting system.

The input/output interface 20 is used by the selling system 12 to operatively couple and communicate with other systems, such as the buying system 14 via a communications system and method as discussed earlier.

The display device 22 displays information for the operator of the selling system 12, such as the status of a contingent payment for the information good. A variety of different types of display devices can be used, such as a monitor, printer, or any other type of device which can convey information to the user of the computer system. The selling system 12 can have more than one display device 22.

The user input device 24 enables an operator to generate and transmit signals or commands to the selling system 12, such as the selected condition for the contingency and the announced or predicted probability of the condition for the contingency occurring. A variety of different types of user input devices 24 can be used, such as a keyboard, computer mouse, or any other user input device which provides a mechanism for a user or operator to enter information into the selling system 12. The selling system 12 can have more than one user input device 24.

The buying system 14 is a computer system with a processor 30, a memory storage device 32, and an input/output interface 34, a display device 36, and a user input device 38 which are coupled together by a bus 40 or other link, although other types of systems can be used for the buying system 14 and the buying system 14 can be comprised of other combinations of components. In this particular example, the buying system 14 executes programmed instructions stored in the memory storage device 32 to: prepare a request for an information good; select a contingency for the information good; submit the request for an information good based on the contingency; receive acceptance or receive denial of the terms of a contract for the information good based on a condition set for the contingency by the selling system 12; and make arrangements for base and/or contingent payments to the selling system 12 for the contingent information good. The buying system 14 can have multiple memory storage devices to store the above-noted programmed instructions and to store instructions for other programs to be executed by the processor 30. The input/output interface 34 is used to operatively couple the buying system 14 to communicate with other systems, such as the selling system 12 as discussed earlier. The display device 36 displays information for the operator of the buying system 14, such as the condition set for the contingency for the information good being offered by the selling system 12. The user input device 38 enables an operator to generate and transmit signals or commands to the buying system 14, such as to set a contingency and to search for a particular type of information good with that contingency.

The operation of the system and method for selling at least one contingent information good will be discussed with reference to Figures 1-3. At step 42, the method begins and then in step 44 the operator of the buying system 14 using the user input device 38 enters a request for at least one information good along with at least one contingency for the information good. The number of information goods requested by the buying system 14 can vary depending upon the particular application. Similarly, the number of contingencies and the particular type of contingency or contingencies selected for each information good can vary depending upon the particular application. By way of example only, the buyer using the buying system 14 can search for a stock report, i.e. the information good, which includes a projection on the future price of a stock for a company X at years end, i.e. the contingency. In step 45, the buying system identifies a source for the information good. If the buying system 14 does not already know where to get the information good, then the buying system 14 may begin a search in a forum, such as the Internet, to identify a source for the information good. By way of example only, a search engine on the Internet could be used to identify a source for the information good.

If a source for the information good can not be identified, then the No branch in step 45 is taken to step 62 where the method ends. If a source of the information goods can be identified, then the Yes branch is taken from step 45 to step 46 where the buying system 14 submits or transmits a request to the identified selling system 12 for the information good based on the contingency using a communication method as described earlier. The selling system 12 receives the request for the information good with the contingency and begins to process the request.

In step 48, the selling system sets a condition for the contingency for the requested information good. This condition may already be stored in memory storage device 18 and is simply recalled and/or could be modified or input using user input device 24.

Next, in step 50 the selling system 12 may set a base payment for the information good to be paid when the information good is provided. The base payment for the information good may be stored in memory storage device 18 and recalled or may be adjusted or set by an operator of the selling system 12 using the user input device 24. The inclusion of a base payment is optional.

In step 52, the selling system sets a contingent payment for the information good is set. The contingent payment may be stored in memory storage device 18 and recalled or may be adjusted or set by an operator of the selling system 12 using the user input device 24. A variety of different types of contingent payments can be set up by the selling system, such as only receiving the contingent payment if the condition set for the contingency is satisfied when the event on which the contingency is based occurs. In another example, the contingent payment could be based on an announced or predicted probability that the condition set by the selling system 12 will be satisfied.

Referring to Figure 3, in step 64 the selling system 12 must set an announced probability or prediction for each possible condition or outcome $i$. The announced probability for the condition can be stored in memory storage device 18 or can be adjusted or input using user input device 24.

Next, in step 66, a formula or function for determining the contingent payment is set. In this particular example, the amount of the contingent payment is based on the announced probability and the amount is designed to be maximized when the announced probability is substantially the same as the true probability for the condition for the contingency occurring.

In this example, let the selling system's 12 announced probability for event $i$ be $a_i$ when the true probability is $p_i$. Let $R(a_i)$ denote a reward or contingent payment function determining the contingent payment paid to the selling system 12 in case event $i$ occurs, as a function of the announced probability for the condition to occur. In this example, the contingent payment function is set up so that the selling system 12 receives some contingent payment no matter what happens, although other payment schemes can be established. The expected reward to the seller who announces the set of probabilities $\{a_i\}$ when the true probabilities are $\{P'_i\}$ is

$$\overline{R\left[\vec{a}\right]} = \sum_i p_i R(a_i) \qquad (1)$$

where a is the vector of announced probabilities. We also have the constraints

$$\sum_i \vec{a}_i = 1$$

and

$$\sum_i p_i = 1.$$

In this particular example, the contingent payment function shown in Eqn. 1 is set to be maximized if and only if $a_i = p_i$ subject to the normalization constraints. There are many functions that can accomplish this, one of them by way of example has the form

$$R(a_i) = k_1 + k_2 \log a_i \qquad (2)$$

where $k_1$ and $k_2$ are arbitrary constants. With this contingent payment function, the selling system 12 who wishes to maximize the contingent payment has no incentive to select or set an announced probability for the condition being satisfied that is not substantially the same as the true probability for that event to occur. The resulting expected contingent payment for this choice of function is the negative entropy of the event distribution. The true probability is the actual likelihood that the condition will be satisfied when the event on which the condition is based occurs and, for example, can be obtained from a study of the actual results or outcomes of the same or a similar condition. Other modifications to the contingent payment function can be made, such as incorporating risk aversion into the equation.

By way of example only, consider: a binary event space; some event occurring or not occurring with probability $p$ and $1 - p$ respectively; $a$ and $1 - a$ are the announced probabilities. Using the contingent payment function of Eqn. 2 and setting $k_1$ = 10 and $k_2$ = 1, the expected contingent payment for announcing a is

$$\bar{R}(a) = 10 + p \log a + (1 - p)\log(1 - a) \qquad (3)$$

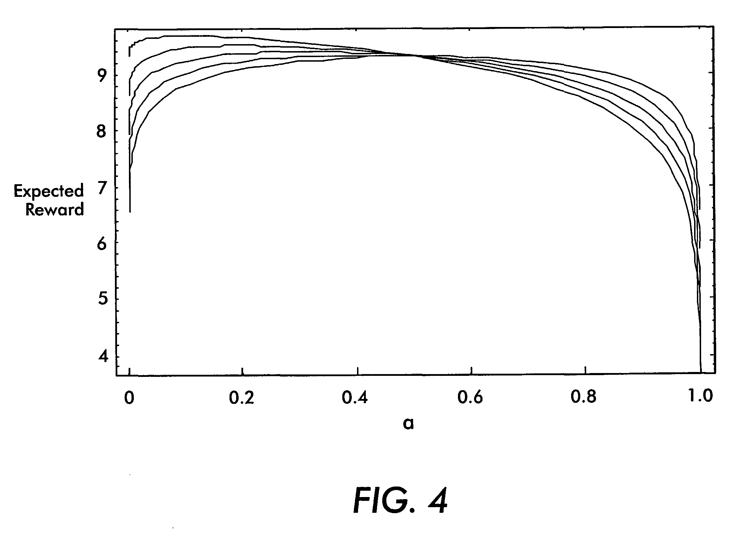

Referring to Figure 4, the expected contingent payment as a function of $a$ for values of $p$ from .1 to .5 in steps of .1 is illustrated. The most symmetric of the curves corresponds to p =.5. The figure shows that the expected reward is maximized for a particular announced value $a$, which is in fact $a = p$.

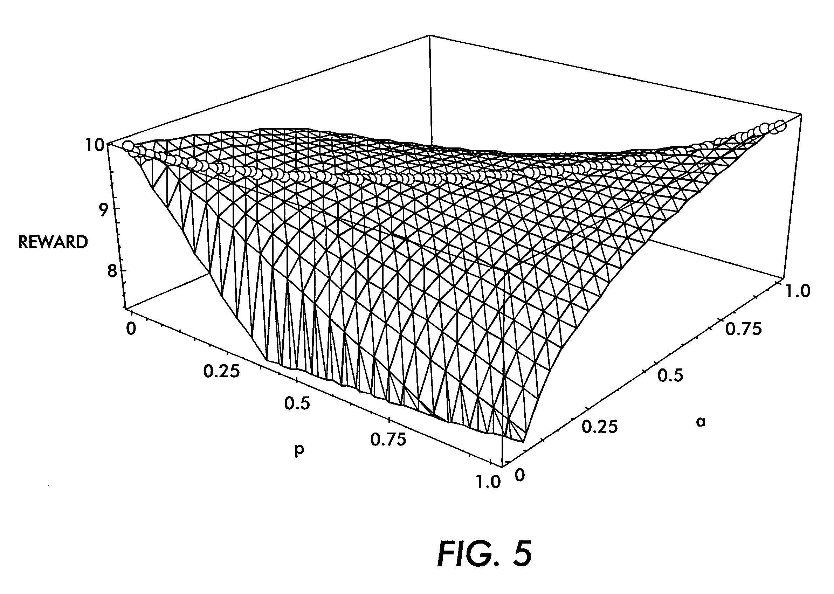

Referring to Figure 5, the expected contingent payment as a function of both $a$ and $p$ and also shows the external curve corresponding to $a = p$ is illustrated. As will be appreciated, a variety of functions or formulas for the contingent payment can be set up to determine the amount paid based on the accuracy of an announced probability made by the selling system 12 for a condition occurring.

Once the function for making the contingent payment is set in step 52, the selling system 12 transmits the set condition or conditions, the base payment required (if any), and the contingent payment function or criteria to the buying system. If one or more of the elements of the contract are unacceptable, then the No branch is taken in step 54 to step 44 where another source for the information good is searched for and the process continues as described above when a source of the information good is identified. If no other source can be identified, then again the No branch is taken from step 44 to step 62 where the method ends.

If the elements of the contract are acceptable, the buying system 14 transmits an acceptance to form a contract with the selling system 12 and the Yes branch is taken from step 54 to step 56. Although one process for forming a contract between the buying system 14 and the selling system 12 is discussed, it will be appreciated that a contract can be formed between the buying system 14 and the selling system 12 in different manners and at different times during this process.

In step 56, the selling system 12 begins to check for the occurrence of the event on which the condition for the contingency is based. The process for checking for the occurrence of the event can vary based on the particular condition and/or application. For example, the selling system 12 may check for the occurrence of the event periodically or upon notification that the event has occurred from an external source. If a check is made and the event has not occurred, then the No branch is taken from step 58 back to step 56 where the checking process continues.

When the event occurs, then the Yes branch is taken from step 58 to step 60 where the selling system 12 determines the contingent payment. As discussed earlier, the contingent payment can be structured in a number of different ways. In accordance with one particular embodiment, if the condition has been satisfied, then the buying system 14 transmits a contingent payment to the selling system 12, otherwise no contingent payment is made. A variety of different mechanisms for making the base and/or contingent payment, such as through an electronic payment system where funds are transmitted electronically to the selling system's account or by using a more traditional billing procedure where a bill is mailed to the buying system 14 for payment. In accordance with another embodiment, the amount of the contingent payment is based on a sliding scale depending on how close the announced probability for the condition occurring was to the true probability. In this particular example, the contingent payment is maximized if the announced probability for the condition occurring by the selling system 12 is substantially the same as the true probability. Once the contingent payment is determined in step 60, then in step 62 the method ends. Although not discussed, a contracting party or system can be used as an intermediary between the buying system 14 and the selling system 12 to handle one or more of the steps described above.

To help illustrate the operation of the system and method, one example is set forth below:

An operator A wishes to purchase a report with projections on company X's stock. Currently, on December 1, 2000 company X's stock is priced at $10. Using a buying system 14, operator A searches for and identifies a selling system 12 with such a report. Using the buying system 14 operator A submits a request for the report with a contingency, "What is the value of Company X's stock at years end?"

The selling system 12 receives the request for the information good, determines if it wants to make an offer. If the selling system 12 wants to make an offer based on the request, the selling system 12 sets a condition that company X's stock will be $50 at the year's end and sends or transmits an offer electronically to the buying system 14. In this particular example, the selling system 12 does not set a base payment for the information good, but sets a contingent payment function as follows:

"Operator A at buying system 14 pays the selling system 12 twenty-five dollars ($25) if the stock ticker for company X's stock is >= 50 at 7 pm EST on 12/31/2000 according to the quote server at www.quote.com. If company X's stock is < 50 then Operator A at buying system 14 pays nothing."

The buying system 14 may accept or reject the offer depending on the set condition. If the buying system 14 accepts the offer, a contract is formed with the condition and the contingent payment function. At the time of purchase of the brokerage report, operator A at buying system 14 may give the selling system 12 operator A's credit card number, although any manner of making payments can be used.

Next, the selling system 14 checks for the occurrence of the event on which the condition is based. In this example, the selling system 14 automatically checks the price of company X's stock at 7 pm EST on 12/31/2000 using the quote server at, for example, www.quote.com. If the condition for the contingency is satisfied as set forth above, then selling system 14 charges operator A's account or credit card $25. If the condition is not satisfied, then no payment is made to the selling system 14 and the method ends.

As the above discussion and example have illustrated, the present invention provides a system and method of selling contingent information goods. Additionally, the present invention makes it more likely that more contingent information goods will be transacted between sellers and buyers by tying at least a portion of the payment made to a seller to the satisfaction of a condition. Further, by tying the amount of the payment to the accuracy of the predict probability against the true probability, the present invention makes it even more likely that the seller will accurately predict a probability of a condition for the contingency occurring.

## Claims

1. A method for selling information to a buyer, the method comprising:

   receiving an offer for the information including at least one contingency from the buyer;
   providing the information in response to the offer; and
   receiving a first payment for the information if at least one condition for the contingency is satisfied after the information has been provided to the buyer.

2. The method as set forth in claim 1, further comprising:

   selecting an announced probability for the condition for the contingency; and
   determining the amount for the first payment based on a function which uses the announced probability for the condition for the contingency occurring.

3. A system for selling information to a buyer, the system comprising:

   a receiving system that receives an offer for the information including at least one contingency from the buyer;
   a source for the information that provides the information in response to the offer; and
   a contingent payment processing system that receives a first payment for the information if at least one condition for the contingency is satisfied after the information has been provided to the buyer.

4. The system as set forth in claim 3, further comprising a base payment processing system that receives a base payment when the information has been provided.

5. The system as set forth in claim 3 or claim 4, wherein the first payment processing system selects an announced probability for the condition for the contingency and a function for determining the amount for the first payment based on the announced probability for the condition for the contingency occurring.

6. The system as set forth in any of claims3 to 5, further comprising:

   a counteroffer system that sends a counteroffer to the buyer based on the offer, the counteroffer providing the condition set for the contingency to the buyer; and

a purchase decision system that determines if the counteroffer with the condition set for the contingency is accepted by the buyer, wherein the information is only provided if the condition set for the contingency is accepted.

7.  A computer readable medium having stored instructions for selling contingent information which when executed by a processor, causes the processor to perform:

receiving an offer for the information including at least one contingency from the buyer;

providing the information in response to the offer; and

receiving a first payment for the information if at least one condition for the contingency is satisfied after the information has been provided to the buyer.

8.  The medium as set forth in claim 7, further comprising:

selecting the announced probability for the condition for the contingency; and

determining the amount for the first payment based on a function which uses the announced probability for the condition for the contingency occurring.

FIG. 1

FIG. 2

64

SELECT AN ANNOUNCED
PROBABILITY

66

SET A FORMULA FOR THE
CONTINGENT PAYMENT

# FIG. 3

FIG. 4

FIG. 5